# EUROPEAN PATENT SPECIFICATION

(11) **EP 2 599 825 B1**
(45) Date of publication and mention of the grant of the patent: **05.10.2016**
(21) Application number: 13156761.2
(22) Date of filing: 28.05.2010
(51) Int. Cl.: C08K 5/00, C08K 5/14, C08K 5/3435, F16L 11/04, B29C 47/20

(54) **Methods and compositions for producing pipe having improved oxidative resistance**
Verfahren und Zusammensetzungen zur Herstellung eines Rohrs mit verbesserter oxidativer Beständigkeit
Procédés et compositions pour produire un tuyau ayant une meilleure résistance à l'oxydation

(30) Priority: 29.05.2009 US 182530 P
(43) Date of publication of application: 05.06.2013
(62) Divisional of application: 10727546.3
(73) Proprietor: Uponor Innovation AB, 73061 Virsbo (SE)
(72) Inventor: Ericsson, Jan, 18594 Vaxholm (SE); John, Jacob, Eagan, Minnesota 55122 (US)
(74) Representative: Selby, David Sean

(56) References cited:
- WO-A1-2009/072073
- DE-A1- 19 637 181
- US-B1- 6 232 376

## Description

### BACKGROUND

Extruded plastic pipes are used for the transport of fluids in a variety of applications. Specifically, such pipes are used to transport hot and/or cold potable water, radiant floor heating or waste water, as well as being used for fire suppression, process pipes in industries such as the food industry, and for conveying fluids other than water such as gases and slurries, among other uses. Plastic pipes are commonly made from thermoplastic polymers, for example polyolefins such as polyethylene (PE) (e.g., PE-raised temperature, or PE-RT), polypropylene (PP), polybutylenes (PB); any copolymers thereof; polyolefin copolymers such as poly(ethylene-co-maleic anhydride); poly(vinyl chloride) (PVC); and chlorinated PVC, i.e., CPVC; among other polymers.

In some cases, the thermoplastic polymers are crosslinked. As one example, cross-linked polyethylene (PEX) is commonly used to produce single or multilayer plastic pipes. There are several PEX production methods that utilize a number of different crosslinking mechanisms and processing technologies. For example, three common varieties of PEX are PEX-a, PEX-b, and PEX-c. PEX-a is produced by the Engel method, which is a peroxide-driven cross-linking process wherein the cross-linking occurs under elevated heat and pressure. In the PEX-b process, a silane is either grafted to, or blended with, a PE resin. The pipe is extruded and, subsequent to extrusion, the pipe is exposed to heat and moisture to form oxygen-silicon covalent bonds, or siloxane bridges. In the PEX-c process, the polyethylene pipe is irradiated with electron beam (EB) radiation. EB radiation creates free radicals, which facilitates cross-linking between the polyethylene polymer chains. There is a need for new methods of manufacture and/or new chemical combinations to improve the processing and/or finished properties of polymer pipe.

### SUMMARY

Example 1 is a flexible polymeric pipe with an outer diameter of at least 5/16 inch, with a wall thickness of between 1.75 mm and 2.05 mm and a burst strength of at least 300 psi. The pipe includes at least 95% by weight of the polymeric pipe of polyethylene structural polymer, between 0.1% and 0.50% by weight of the polymeric pipe of a cross-linking agent, between 0.05% and 0.6% by weight of the polymeric pipe of an antioxidant, and between 0.01 % and 1%, in particular between 0.01 and 0.6% by weight of the polymeric pipe of a hindered amine light stabilizer selected from the group consisting of 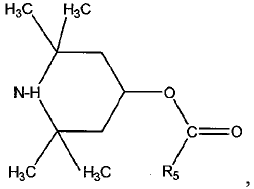 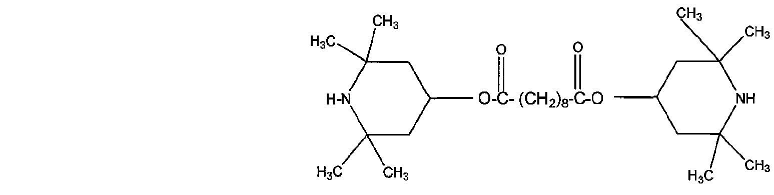 or 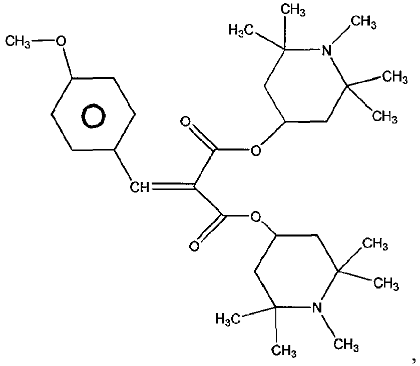 where R₅ is a C₂-C₂₄ alkyl or allyl group.
In Example 2, the flexible polymeric pipe of Example 1 in which the hindered amine light stabilizer includes 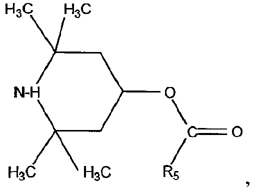 where R₅ is a C₂-C₂₄ alkyl or allyl group.
In Example 3, the flexible polymeric pipe of Example 1 in which the hindered amine light stabilizer includes 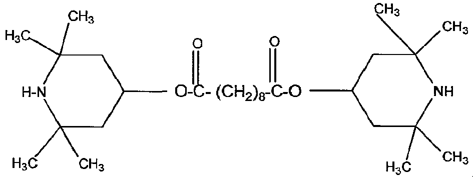
In Example 4, the flexible polymeric pipe of Example 1 in which the hindered amine light stabilizer includes 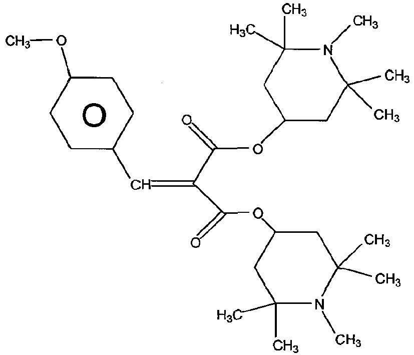
Example 5 is a flexible polymeric pipe with an outer diameter of at least 5/16 inch, with a wall thickness of between 1.75 mm and 2.05 mm and a burst strength of at least 300 psi. The pipe includes at least 95% by weight of the polymeric pipe of polyethylene structural polymer, between 0.1% and 0.50% by weight of the polymeric pipe of a cross-linking agent, between 0.05% and 0.6% by weight of the polymeric pipe of an antioxidant and between 0.01 % and 0.6% by weight of the polymeric pipe of a hindered amine light stabilizer. The hindered amine light stabilizer includes a piperidine structure with at least one alkyl group at each of the 2 and 6 positions of the piperidine structure and C₁₂-C₂₁-saturated or -unsaturated esters at at least one of the 3, 4 or 5 positions of the piperidine structure.
In Example 6, the flexible polymeric pipe of Example 5 in which the cross-linking agent includes di-tert-butyl peroxide.
In Example 7, the flexible polymeric pipe of Example 6 in which the antioxidant includes octadecyl 3-(3-5-di-tert-butyl-4-hydroxyphenyl) propionate.
In Example 8, the flexible polymeric pipe of Example 6 or Example 7 in which the hindered amine light stabilizer includes a piperidine structure with two alkyl groups at each of the 2 and 6 positions of the piperidine structure.
In Example 9, the flexible polymeric pipe of any of Examples 6-8 in which the hindered amine light stabilizer includes 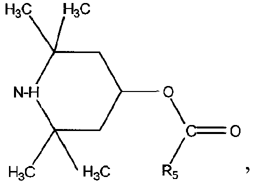 where R₅ is a C₂-C₂₄ alkyl or allyl group.
Example 10 is a method of producing a flexible polymeric pipe. The method includes providing a blend of at least 95% by weight of the blend of polyethylene structural polymer, between 0.1 % and 0.5% by weight of the blend of a cross-linking agent, between 0.05% and 0.6% by weight of the blend of an antioxidant, and between 0.01% and 0.6% by weight of the polymeric pipe of a hindered amine light stabilizer. The hindered amine light stabilizer includes a piperidine structure with at least one alkyl group at each of the 2 and 6 positions of the piperidine structure and C₁₂-C₂₁-saturated or unsaturated esters at least one of the 3, 4 or 5 positions of the piperidine structure. The blend is extruded through a die to produce a pipe-shaped structure and the structural polymer is cross-linked.
In Example 11, the method of Example 10 in which the cross-linking agent includes di-tert-butyl peroxide.
In Example 12, the method of Example 10 or Example 11 in which the antioxidant is octadecyl 3-(3-5-di-tert-butyl-4-hydroxyphenyl) propionate.
In Example 13, the method of any of Examples 10-12 in which the hindered amine light stabilizer includes a piperidine structure with two alkyl groups at each of the 2 and 6 positions of the piperidine structure.
In Example 14, the method of any of Examples 10-13 in which the hindered amine light stabilizer includes 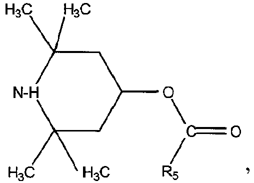 where R₅ is a C₂-C₂₄ alkyl or allyl group.
In Example 15, the method of any of Examples 10-14 in which the polyethylene structural polymer is cross-linked at least in part while the blend is being extruded.
Example 16 is a flexible polymeric pipe with an outer diameter of at least 5/16 inch, with a wall thickness of between 1.75 mm and 2.05 mm and a burst strength of at least 300 psi. The pipe includes at least 95% by weight of the polymeric pipe of a cross-linked polyethylene, between 0.1% and 0.5% by weight of the polymeric pipe of a cross-linking agent, between 0.05% and 0.6% by weight of the polymeric pipe of an antioxidant, and between 0.01% and 0.6% by weight of the polymeric pipe of a hindered amine light stabilizer. The hindered amine light stabilizer has two piperidine functional groups each with at least one alkyl group at each of the 2 and 6 positions of the piperidine structure, wherein the piperidine functional groups are attached to one another via a bridging group, the bridging group having one or more double bonds.
In Example 17, the flexible polymeric pipe of Example 16 in which the cross-linking agent includes di-tert-butyl peroxide.
In Example 18, the flexible polymeric pipe of Example 16 or Example 17 in which the antioxidant includes octadecyl 3-(3-5-di-tert-butyl-4-hydroxyphenyl) propionate.
In Example 19, the flexible polymeric pipe of any of Examples 16-18 in which the bridging group includes one or more ester functional groups.
In Example 20, the flexible polymeric pipe of any of Examples 16-19 in which the bridging group includes two or more ester functional groups.
In Example 21, the flexible polymeric pipe of any of Examples 16-20 in which the bridging group includes a methylene group.
In Example 22, the flexible polymeric pipe of any of Examples 16-21 in which the bridging group includes a methylene group between two ester functional groups, wherein both of the ester groups are attached directly to a piperidine group at a 3, 4 of 5 positions.
In Example 23, the flexible polymeric pipe of any of Examples 16-22 in which the hindered light amine stabilizer includes a piperidine structure with two alkyl groups at each of the 2 and 6 positions of the piperidine structure.
In Example 24, the flexible polymeric pipe of any of Examples 16-23 in which the hindered amine light stabilizer includes 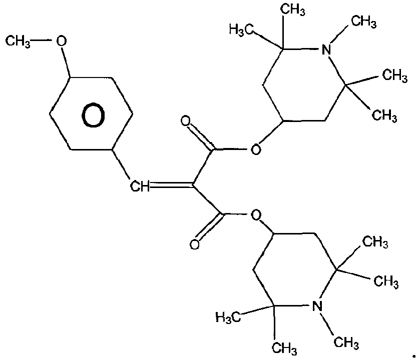
Example 25 is a method of producing a flexible polymeric pipe. The method includes providing a blend of at least 95% by weight of the blend of polyethylene structural polymer, between 0.1% and 0.5% by weight of the blend of a cross-linking agent, between 0.05% and 0.6% by weight of the blend of an antioxidant, and between 0.01% and 0.6% by weight of the polymeric pipe of a hindered amine light stabilizer. The hindered amine light stabilizer has two piperidine functional groups each with at least one alkyl group at each of the 2 and 6 positions of the piperidine structure, wherein the piperidine functional groups are attached to one another via a bridging group, the bridging group having one or more double bonds. The blend is extruded through a die to produce a pipe-shaped structure and the polyethylene structural polymer is cross-linked.
In Example 26, the method of Example 25 in which the cross-linking agent includes di-tert-butyl peroxide.
In Example 27, the method of Example 25 or Example 26 in which the antioxidant is octadecyl 3-(3-5-di-tert-butyl-4-hydroxyphenyl) propionate.
In Example 28, the method of any of Examples 24-27 in which the polyethylene structural polymer is cross-linked at least in part while the blend is being extruded.
In Example 29, the method of any of Examples 24-28 in which the hindered amine light stabilizer includes a piperidine structure with two alkyl groups at each of the 2 and 6 positions of the piperidine structure.
In Example 30, the method of any of Examples 24-29 in which the hindered amine light stabilizer includes 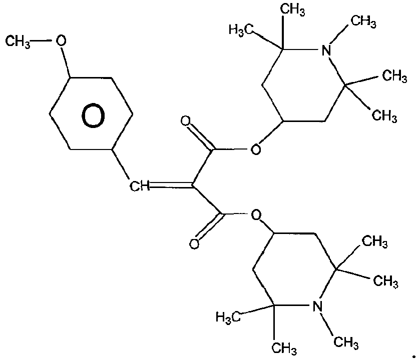
Example 31 is a method of producing a flexible polymeric pipe. The method includes providing a blend of at least 95% by weight of the blend of polyethylene structural polymer, between 0.1% and 0.5% by weight of the blend of a cross-linking agent, between 0.05% and 0.6% by weight of the blend of an antioxidant, and between 0.01% and 0.6% by weight of the polymeric pipe of a hindered amine light stabilizer. The hindered amine light stabilizer has the following structure: 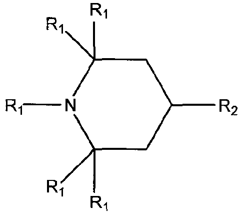 wherein at least one of the R₁ groups at each of the 2 and 6 positions are a C₁-C₃₀ saturated or unsaturated aliphatic moiety and wherein R₂ is a C₂-C₃₀ saturated or unsaturated straight, branched or cyclic aliphatic moiety such as a hydrocarbon (consisting only of carbon and hydrogen), an ester, an ether, or other suitable functional group.

### BRIEF DESCRIPTION OF THE DRAWINGS

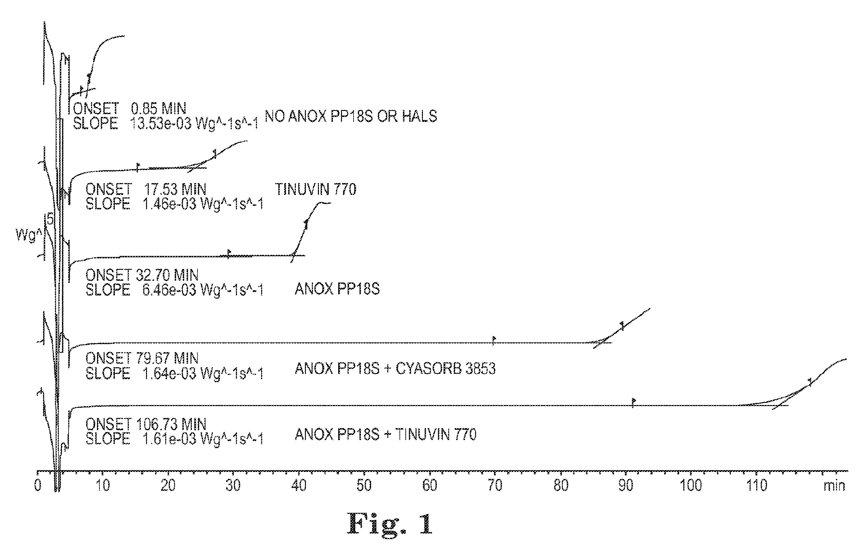

Figure 1 shows a series of curves from OIT testing various polymer blends.

While the invention is amenable to various modifications and alternative forms, specific embodiments have been shown by way of example in the drawings and are described in detail below. The intention, however, is not to limit the invention to the particular embodiments described. On the contrary, the invention is intended to cover all modifications, equivalents, and alternatives falling within the scope of the invention as defined by the appended claims.

### DETAILED DESCRIPTION

Polymeric pipes of this invention may be used for variety of applications, for example transport of hot and/or cold potable water, radiant floor heating, or waste water, as well as being used in fire sprinklers, process pipes in industries such as the food industry, and for conveying fluids other than water such as gases and slurries, among other uses. In some embodiments, these polymeric pipes include a base pipe with one or more layers disposed on the base pipe. Examples of various layers that may be disposed on a polymeric base pipe are included in U.S. Application No. 61/102,636, entitled "Methods and Compositions for Coating Pipe," filed October 3,2008, which is incorporated by reference in its entirety. In other embodiments, the polymeric pipe includes the base pipe with no layers disposed on the base pipe.

The base pipe may be produced using an extrusion process in which a polymer blend is extruded through a die to produce the shape of the base pipe. The polymer blend includes one or more structural polymers blended together with various additives. The various additives assist with processing the polymer blend and/or enhance the properties of the pipe. In some embodiments of the invention, the additives include both an antioxidant (AO) and a hindered amine light stabilizer (HALS). Optionally, the polymer blend also includes one or more cross-linking agents and/or cross-linking promoters. The structural polymer and the additives may be pre-compounded together so that the polymer blend is supplied as one raw material. Alternatively, two or more of the components of the polymer blend may be supplied separately and the multiple components are melt-blended together immediately prior to, or within, the extrusion process.

Although the specification describes the structural polymer primarily as polyethylene (PE), those of ordinary skill in the art understand that various other structural polymers may be used in place of polyethylene. For example, the structural polymer may be a polyolefin such as PE (e.g., PE-raised temperature, or PE-RT), polypropylene (PP), polybutylenes (PB); any copolymers thereof; polyolefin copolymers such as poly(ethylene-co-maleic anhydride); poly(vinyl chloride) (PVC); and chlorinated PVC, i.e., CPVC; among other polymers. Specific varieties of PE that may be used in the present invention include high density PE (HDPE), low density PE (LDPE), medium density PE (MDPE), or ultra-high molecular weight polyethylene, or combinations thereof. The polymer blend may have at least 90 wt% structural polymer, at least 95 wt% structural polymer, at least 97 wt% structural polymer, or at least 99% structural polymer.

Examples of specific grades of PE that may be used as the structural polymer in the present invention are Lupolen 5261Z Q456 (MFR 2.0g/10 min; density 0.954 g/cm³); Lupolen 5461B Q471 (10.0 g/10 min; 0.953 g/cm³); Lupolen 4261A Q416 (8.5 g/10 min; 0.946 g/cm³); XF 1522 (MFR 5.76g/10 min; 0.953 g/cm³); BorPEX HE 1878 (3.0 g/10 min; 0.955 g/cm³); BorPEX HE 1878E (10.0 g/10 min; 0.951 g/cm³); BorPEX HE 2550 (6.0 g/10 min; 0.956 g/cm³); BorPEX HE 2591 (10.0 g/10 min; 0.944 g/cm³). (Lupolen polymers are available from LyondellBasell, XF 1522 polymer is available from Ineos, and BorPEX polymers are available from Borealis. All melt flow rate measurements are taken at 190°C and 21.6kg.)

In addition, the structural polymer may be cross-linked or may be non-cross-linked in the finished pipe. Cross-linked structural polymers include PE or any of the other polyolefins mentioned above. Cross-linked polymer systems may be cross-linked via a variety of cross-linking processes, including the PEX-a, PEX-b and PEX-c processes described above, UV cross-linking, or via any other cross-linking process. The total amount of cross-linking agent (e.g., any one or more of the cross-linking agents described herein) may be from 0.28-0.39 wt%, from 0.1-0.5 wt % or from 0.2 to 0.45 wt%, or about 0.35 wt%, or about 0.28 wt% based on the total weight of the polymer blend.

In some embodiments, the polymer blend may include cross-linking agent(s) or cross-linking promoter(s) that facilitate the cross-linking of the structural polymer. For example, various cross-linking agents facilitate the cross-linking of the structural polymer under elevated pressure and temperature inherent in the extrusion process. Such cross-linking agents may be used to facilitate the PEX-a pipe production method or other similar chemical processes. Exemplary cross-linking agents that facilitate this type of cross-linking include thermally activated free-radical initiators such as organic peroxides from Arkema (e.g., Dialkyl peroxides: dicumylperoxide, di(t-butyl)-peroxide, di(t-amyl)-peroxide, 2,5- di(t-butyl)peroxy-2,5-dimetly-3-hexyne, α, α -bis(t-butylperoxy)- diisopropylbenzene (which can contain multiple isomers), t-butylcumyl peroxide, 2,5-di(t-butylperoxy)-2,5-dimethylhexane; Diacylperoxides: benzoylperoxide, decanoyl peroxide, lauryl peroxide, succinic acid peroxide; Diperoxyketals: 1,1-di(t-butylperoxy)-3,3,5-trimethylcyclohexane, 1,1-di(t-butylperoxy)-cyclohexane, 1,1-di(t-amylperoxy)-cyclohexane, n-butyl-4,4-di(t-butylperoxy)valerate, ethyl 3,3-di-(t-amylperoxy)butanoate, ethyl 3,3-di(t-butylperoxy)butyrate, blend of 40% 1,1-di(t-butylperoxy)-cyclohexane & 25% t-butyl peroxy-2-ethylhexanoate; Hydroperoxides: Cumene hydroperoxide, t-butyl hydroperoxide; Ketone peroxides: Methyl ethyl ketone peroxide, 2,4-pentanedione peroxide, blend of methyl ethyl ketone peroxide & cumene hydroperoxide; Peroxydicarbonates: Di(t-propyl) peroxydicarbonate, di(sec-butyl) peroxydicarbonate, di(2-ethylhexyl)peroxydicarbonate.

In addition, various cross-linking agents facilitate the cross-linking of the structural polymer when exposed to heat and moisture. Such cross-linking agents may be used to facilitate the PEX-b pipe production method or other similar chemical processes. For example, a silane is blended with a structural polymer such as HDPE resin and, when exposed to heat and moisture, the silane couples to the HDPE and also forms oxygen-silicon covalent bonds (siloxane "bridges") between silane groups. This type of bonding may also be facilitated by PE that has silane groups (e.g., a vinylsilane group) pre-grafted to the polymer chain prior to extrusion of the polymer.

Other agents may be added to accelerate, or promote, a cross-linking process, for example any of the cross-linking processes described above. Examples of crosslinking promoters/agents could be any chemical compound containing an unsaturation in the molecule. Representative examples come from the acrylate family of monomers and oligomers, styrene derivatives, allyl ethers, vinyl ethers, unsaturated polyesters, or other suitable compounds. Specific examples include functionalized compounds (preferably acrylated or allylated Boltorn molecules supplied by Perstorp, Sweden) and/or triallylcyanurate (TAC). In addition, any combination of these promoters/agents may be used in the polymer blend to enhance crosslinking efficiency.

The polymer blends also include a combination of one or more antioxidants (AOs) together with one or more hindered amine light stabilizers (HALS). AOs may be used to preserve the polymer blend during the production process, for example when the polymer blend is exposed to the elevated heat and pressure of the extrusion process. Specifically, some structural polymers such as PE will tend to lose its mechanical properties through oxidative degradation when exposed to heat and pressure, in some cases forming shorter chains, effectively decreasing the average molecular weight of the structural polymer and changing the characteristics of the structural polymer.

AOs may also facilitate the maintenance of pipe properties over time, especially when the pipe is exposed to chlorine or other oxidizing agents. In one example, a fluid that is present in the pipe may contain oxidizing agents such as chlorine, which over time may tend to oxidize and break down a structural polymer such as PE. Such oxidation may cause degradation in the properties of the structural polymer and the finished pipe. In some examples, AOs tend to preserve the properties of the structural polymer in the presence of an oxidative environment. The total amount of AO (e.g., any one or more of the AO described herein) may be from 0.38-0.57 wt%, from 0.05-0.6 wt % or from 0.2 to 0.6 wt%, or about 0.5 wt% based on the total weight of the polymer blend.

Suitable AOs include phenolic antioxidants. Examples of such AOs include octadecyl 3-(3,5-ditert-butyl-4-hydroxyphenyl) propanoate (Irganox 1076); alkylated monophenols such as 2,6-di-tert-butyl-4-methylphenol, 2-tert-butyl-4,6-dimethylphenol; 2,6-di-tert-butyl-4-ethylphenol; 2,6-di-tert-butyl-4-n-butylphenol; 2,6-di-tert-butyl-4-isobutylphenol; 2,6-dicyclopentyl-4-methylphenol; 2-(α-methylcyclohexyl)-4,6-dimethylphenol; 2,6-dioctadecyl-4-methylphenol; 2,4,6-tricyclohexylphenol; 2,6-di-tert-butyl-4-methoxymethylphenol; nonylphenols which are linear or branched in the side chains, for example 2,6-di-nonyl-4-methylphenol; 2,4-dimethyl-6-(1'-methylundec-1'-yl)phenol; 2,4-dimethyl-6-(1'-methylheptadec-1'-yl)phenol; 2,4-dimethyl-6-(1'-methyltridec-1'-yl)phenol; alkylthiomethylhenols such as 2,4-dioctylthiomethyl-6-tertbutylphenol; 2,4-dioctylthiomethyl-6-methylphenol; 2,4-dioctylthiomethyl-6-ethylphenol; 2,6-di-dodecylthiomethyl-4-nonylphenol; hydroquinones and alkylated hydroquinones such as 2,6-di-tert-butyl-4-methoxyphenol; 2,5-di-tert-butylhydroquinone; 2,5-di-tert-amylhydroquinone; 2,6-diphenyl-4-octadecyloxyphenol; 2,6-di-tert-butylhydroquinone; 2,5-di-tert-butyl-4-hydroxyanisole; 3,5-di-tert-butyl-4-hydroxyanisole; 3,5-di-tert-butyl-4-hydroxyphenyl stearate; bis(3,5-di-tert-butyl-4-hydroxyphenyl)adipate; tocooherols such as α-tocopherol; ß-tocopherol; γ-tocopherol; delta-tocopherol and mixtures thereof (vitamin E); hydroxylated thiodichenyl ethers such as 2,2'-thiobis(6-tert-butyl-4-methylphenol); 2,2'-thiobis(4-octylphenol); 4,4'-thiobis(6-tert-butyl-3-methylphenol); 4,4'-thiobis(6-tert-butyl-2-methylphenol); 4,4'-thiobis(3,6-di-sec-amylphenol), 4,4'-bis(2,6-dimethyl-4-hydroxyphenyl)-disulfide; alkylidenebisphenols such as 2,2'-methylenebis(6-tert-butyl-4-methylphenol); 2,2'-methylenebis(6-tert-butyl-4-ethylphenol); 2,2'-methylenebis[4-methyl-6-(a-methylcyclohexyl)-phenol]; 2,2'-methylenebis(4-methyl-6-cyclohexylphenol); 2,2'-methylenebis(6-nonyl-4-methylphenol); 2,2'-methylenebis(4,6-di-tert-butylphenol); 2,2'-ethylidenebis(4,6-di-tertbutylphenol); 2,2'-ethylidenebis(6-tert-butyl-4-isobutylphenol); 2,2'-methylenebis[6-(a-methylbenzyl)-4-nonylphenol]; 2,2'-methylenebis[6-(α, α -dimethylbenzyl)-4-nonylphenol]; 4,4'-methylenebis(2,6-di-tert-butylphenol); 4,4'-methylenebis(6-tert-butyl-2-methylphenol); 1,1-bis(5-tert-butyl-4-hydroxy-2-methylphenyl)butane; 2,6-bis(3-tert-butyl-5-methyl-2-hydroxybenzyl)-4-methylphenol; 1,1,3-tris(5-tert-butyl-4-hydroxy-2-methylphenyl)butane; 1,1-bis(5-tert-butyl-4-hydroxy-2-methylphenyl)-3-n-dodecylmercaptobutane; ethylene glycol bis[3,3-bis(3'-tertbutyl-4'-hydroxyphenyl)butyrate]; bis(3-tert-butyl-4-hydroxy-5-methyl-phenyl)dicyclopentadiene; bis[2-(3'-tert-butyl-2'-hydroxy-5'-methylbenzyl)-6-tert-butyl-4-methylphenyl]terephthalate; 1,1-bis-(3,5-dimethyl-2-hydroxyphenyl)butane; 2,2-bis(3,5-di-tert-butyl-4-hydroxyphenyl)propane; 2,2-bis-(5-tert-butyl-4-hydroxy-2-methylphenyl)-4-n-dodecylmercaptobutane; 1,1,5,5-tetra(5-tert-butyl-4-hydroxy-2-methylphenyl)pentane; O-, N- and S-benzyl compounds such as 3,5,3',5'-tetra-tert-butyl-4,4'-dihydroxydibenzyl ether; octadecyl-4-hydroxy-3,5-dimethylbenzylmercaptoacetate; tridecyl-4-hydroxy-3,5-di-tert-butylbenzylmercaptoacetate; tris(3,5-di-tert-butyl-4-hydroxybenzyl)amine; bis(4-tert-butyl-3-hydroxy-2,6-dimethylbenzyl)dithioterephthalate; bis(3,5-di-tert-butyl-4-hydroxybenzyl)sulfide; isooctyl-3,5-di-tert-butyl-4-hydroxybenzylmercaptoacetate; hydroxybenzylated malonates such as dioctadecyl-2,2-bis(3,5-di-tert-butyl-2-hydroxybenzyl)malonate; di-octadecyl-2-(3-tert-butyl-4-hydroxy-5-methylbenzyl)malonate; di-dodecylmercaptoethyl-2,2-bis(3,5-di-tert-butyl-4-hydroxybenzyl)malonate; bis[4-(1,1,3,3-tetramethylbutyl)phenyl]-2,2-bis(3,5-di-tert-butyl-4-hyd- roxybenzyl)malonate; aromatic hydroxybenzyl compounds such as 1,3,5-tris(3,5-di-tert-butyl-4-hydroxybenzyl)-2,4,6-trimethylbenzene; 1,4-bis(3,5-di-tert-butyl-4-hydroxybenzyl)-2,3,5,6-tetramethylbenzene; 2,4,6-tris(3,5-di-tert-butyl-4-hydroxybenzyl)phenol; triazine compounds such as 2,4-bis(octylmercapto)-6-(3,5-di-tert-butyl-4-hydroxyanilino)-1,3,5-triazine; 2-octylmercapto-4,6-bis(3,5-di-tert-butyl-4-hydroxyanilino)-1,3,5-triazine; 2-octylmercapto-4,6-bis(3,5-di-tert-butyl-4-hydroxyphenoxy)-1,3,5-t- triazine; 2,4,6-tris-(3,5-di-tert-butyl-4-hydroxyphenoxy)-1,2,3-triazine; 1,3,5-tris(3,5-di-tert-butyl-4-hydroxybenzyl)isocyanurate; 1,3,5-tris(4-tert-butyl-3-hydroxy-2,6-dimethylbenzyl)isocyanurate; 2,4,6-tris-(3,5-di-tert-butyl-4-hydroxyphenylethyl)-1,3,5-triazine; 1,3,5-tris(3,5-di-tert-butyl-4-hydroxyphenylpropionyl)-hexahydro-1,3,5-triazine; 1,3,5-tris(3,5-dicyclohexyl-4-hydroxybenzyl)isocyanurate; benzylphosphonates such as dimethyl-2,5-di-tert-butyl-4-hydroxybenzylphosphonate; diethyl-3,5-di-tert-butyl-4-hydroxybenzylphosphonate; dioctadecy13,5-di-tert-butyl-4-hydroxybenzylphosphonate; dioctadecyl-5-tert-butyl-4-hydroxy-3-methylbenzylphosphonate; the calcium salt of the monoethyl ester of 3,5-di-tert-butyl-4-hydroxybenzylphosphonic acid; acylaminophenols such as 4-hydroxylauranilide; 4-hydroxystearanilide; octyl N-(3,5-di-tert-butyl-4-hydroxyphenyl)carbamate; esters of 13-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; esters of 13-(5-tert-butyl-4-hydroxy-3-methylphenyl)propionic acid with mono- or poly-hydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane, 3,9-bis[2-{3-(3-tertbutyl-4-hydroxy-5-methylphenyl)propionyloxy}-1,1 -dime- thylethyl]-2,4,8,10-tetraoxaspiro[5.5]-undecane; esters of ß -(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; or esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane, or mixtures thereof.

HALS are compounds in which an amine group is sterically hindered by adjacent functional groups. In some embodiments, the physical properties of structural polymers such as PE will tend to degrade over time when exposed to ultraviolet (UV) wavelengths of light. The use of HALS in the polymer blend interferes with this degradation and facilitates the maintenance of the structural polymer properties over time. The total amount of HALS (e.g., any one or more of the HALS described herein) may be from 0.05-0.15 wt%, from 0.05-0.2 wt%, from 0.01-0.6 wt % or from 0.05 to 0.3 wt%, about 0.1 wt%, or about 0.15 wt% based on the total weight of the polymer blend.

Examples of HALS that may be included in the polymer blend include N,N'-bis(2,2,6,6-tetramethyl piperidin-4-yl)hexane-1,6 diamine (Chimassorb 944 from CIBA); 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (Chimassorb 119 from CIBA); decanedioic acid, bis(2,2,6,6-tetramethyl-4-piperidyl) ester (Tinuvin 770 from CIBA or Hostavin N17 from CLARIANT); decanedioic acid, bis(2,2,6,6-tetramethyl-1-(methyl)-4-piperidyl) ester (Tinuvin 765 from CIBA); decanedioic acid, bis(2,2,6,6-tetramethyl-1-(octyloxy)-4-piperidyl) ester (Tinuvin 123 from CIBA); butanedioic acid, dimethylester, polymer with 4-hydroxy-2,2,6,6-tetramethyl-1-piperidine ethanol (Tinuvin 622 from CIBA) or polymer of dimethyl succinate and 4-hydroxy-2,2,6,6-tetramethyl-1-piperidine ethanol (Lowilite 62 from GREAT LAKES POLYMER ADDITIVES); 2,2,4,4-tetramethyl-7-oxa-3,20-diaza-dispiro-[5.1.11.2]-heneicosan-21-on (Hostavin N20 from CLARIANT); mixture of 2,2,4,4-tetramethyl-20-(13-myristyl and lauryl-oxycarbonyl)-ethyl-7-oxa-3,20-diazadispiro-[5.1.11.2]-heneicosanon-21 (Hostavin N24 from CLARIANT); polymer of 2,2,4,4-tetramethyl-7-oxa-3,20-diaza-dispiro-[5.1.11.2]-heneicosan-21-on and Epichlorohydrin (Hostavin N30 from CLARIANT); a mixture of Hostavin N24 and N30 (Hostavin N321 from CLARIANT); polymer of 2,2,4,4-tetramethyl-7-oxa-3,20-diazadispiro-[5.1.11.2]-heneicosan-21-on and Epichlorohydrin blended with acid scavengers (Hostavin N391 from CLARIANT); bis(1,2,2,6,6-pentamethyl-4-piperidinyl)-2-(4-methoxy-benzylidene) malonate (Hostavin PR-31 from CLARIANT); 1,3 benzendicarboxamide,N,N'-bis(2,2,6,6-tetramethyl-4-piperidinyl) (Nylostab S-EED from CLARIANT); 1,6-hexanediamine,N,N'-bis(2,2,6,6-tetramethyl-4-piperidinyl)-, polymers with 2,4-dichloro-6-(4-morpholinyl)-1,3,5-triazine 2-[4,6-bis(2,4-dimethylphenyl)-1,3,5-triazin-2-yl]-5-(octyloxy)phenol (Cyasorb THT 4611 from CYTEC); 1,6-hexanediamine,N,N'-bis(2,2,6,6-tetramethyl-4-piperidinyl)-, polymers with morpholine-2,4,6-trichloro-1,3,5-triazine reaction products, methylated 2-[4,6-bis(2,4-dimethylphenyl)-1,3,5-triazin-2-yl]-5-(octyloxy) phenol (Cyasorb THT 6435 from CYTEC); 1,6-hexanediamine,N,N'-bis(2,2,6,6-tetramethyl-4-piperidinyl)-, polymers with 2,4-dichloro-6-(4-morpholinyl)-1,3,5-triazine (Cyasorb UV-3346 from CYTEC); 1,6-hexanediamine,N,N'-bis(2,2,6,6-tetramethyl-4-piperidinyl)-, polymers with morpholine-2,4,6-trichloro-1,3,5-triazine reaction products, methylated (Cyasorb UV-3529 from CYTEC); 2,2,6,6-tetramethyl-4-piperidinyl stearate (fatty aid mixture) (Cyasorb UV-3853 from CYTEC); Cyasorb UV3853 dispersed in polypropylene or LDPE (Cyasorb UV3853PP4 (40% HALS, 60% PP), Cyasorb UV3853PP5 (50% HALS, 50% PP) and Cyasorb UV3853S (50% HALS, 50% LDPE)); poly[[6-[(1,1,3,3-tetramethylbutyl)amino]-1,3,5-triazine-2,4-diyl][(2,2,6,6-tetramethyl-4-piperidyl)imino]hexamethylene[(2,2,6,6-tetramethyl-4-piperidyl)imino]] (Lowilite 94 from CHEMTURA); butanedioic acid, bis(2,2,6,6-tetramethyl-4-piperidyl); decanedioic acid, bis(1,2,2,6,6-pentamethyl-4-piperidyl); the condensate of 1-(2-hydroxyethyl)-2,2,6,6-tetramethyl-4-hydroxypiperidine and succinic acid; linear or cyclic condensates of N,N'-bis(2,2,6,6-tetramethyl-4-piperidyl)hexamethylenediamine and 4-tert-octylamino-2,6-dichloro-1,3,5-triazine; tris(2,2,6,6-tetramethyl-4-piperidyl)nitrilotriacetate; tetrakis(2,2,6,6-tetramethyl-4-piperidyl)-1,2,3,4-butanetetracarboxylate; bis(1,2,2,6,6-pentamethylpiperidyl)-2-n-butyl-2-(2-hydroxy-3,5-di-tert-bu- tylbenzyl)-malonate; linear or cyclic condensates of N,N'-bis(2,2,6,6-tetramethyl-4-piperidyl)hexamethylene-diamine and 4-morpholino-2,6-dichloro-1,3,5-triazine; the condensate of 2-chloro-4,6-bis(4-n-butylamino-2,2,6,6-tetramethylpiperidyl)-1,3,5-triaz- ine and 1,2-bis(3-aminopropylamino)-ethane; the condensate of 2-chloro-4,6-di-(4-n-butylamino-1,2,2,6,6-pentamethylpiperidyl)-1,3,5-tri- azine and 1,2-bis(3-aminopropylamino)ethane; 3-dodecyl-1-(1,2,2,6,6-pentamethyl-4-piperidyl)pyrrolidine-2,5-dione; a mixture of 4-hexadecyloxy- and 4-stearyloxy-2,2,6,6-tetramethylpiperidine; a condensate of N,N'-bis(2,2,6,6-tetramethyl-4-piperidyl)hexamethylenediamine and 4-cyclohexylamino-2,6-dichloro-1,3,5-triazine; a condensate of 1,2-bis(3-aminopropylamino)ethane and 2,4,6-trichloro-1,3,5-triazine as well as 4-butylamino-2,2,6.6-tetratnethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. (192268-64-7]); N-(2,2,6,6-tetramethyl-4-piperidyl)-n-dodecylsuccinimide; N-(1,2,2,6,6-pentamethyl-4-piperidyl)-n-dodecylsuccinimide; N,N'-bis-formyl-N,N'-bis(2,2,6,6-tetramethyl-4-piperidyl)hexamethy- lenediamine; a diester of 4-methoxymethylenemalonic acid with 1,2,2,6,6-pentamethyl-4-hydroxypiperidine; poly[methylpropyl-3-oxy-4-(2,2,6,6-tetramethyl-4-piperidyl)]siloxane; a reaction product of maleic acid anhydride-a-olefin copolymer with 2,2,6,6-tetramethyl-4-aminopiperidine or 1,2,2,6,6-pentamethyl-4-aminopiperidine. In addition, any combination of the above HALS may be used in the polymer blend.

In some embodiments, the polymer blend comprising a HALS including piperidine. In some such embodiments, the HALS have the following general chemical structure: 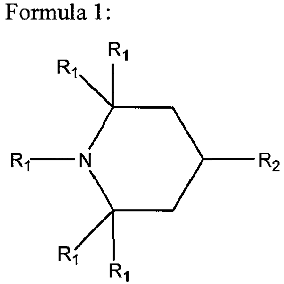
wherein each R₁ may be hydrogen or a C₁-C₃₀ saturated or unsaturated aliphatic moiety; and
wherein R₂ may be a C₂-C₃₀ saturated or unsaturated straight, branched or cyclic aliphatic moiety such as a hydrocarbon (consisting only of carbon and hydrogen), an ester, an ether, or other suitable functional group.

In some embodiments, at least one of the R₁ groups at each of the 2 and 6 positions is a C₁-C₃₀ saturated or unsaturated straight, branched or cyclic aliphatic moiety, while in other embodiments both of the R₁ groups at each of the 2 and 6 positions is a C₁-C₃₀ saturated or unsaturated straight, branched or cyclic aliphatic moiety. In one example, one or both of the R₁ groups at the 2 and 6 positions in the piperidine ring are alkyl groups (e.g., a methyl or ethyl group), and the R₁ at the 1 position in the piperidine ring is a hydrogen, methyl or ethyl group.

In some embodiments, R₂ is a long chain (C₆ or greater, C₈ or greater, C₁₂ or greater, or C₁₆ or greater) straight or branched aliphatic functional group, at least a portion of which is compatible with a nonpolar structural polymer such as PE (see, for example, Formula 3 below). In other embodiments, R₂ may include an alicyclic structure such as a second piperidine ring. Where R₂ includes a piperidine ring, a portion of R₂ may act as a bridge between two piperidine rings (see, for example, Formulas 4 and 5 below). In some such embodiments, the bridge between the two piperidine rings may be a saturated aliphatic moiety or an unsaturated aliphatic moiety (e.g., it may contain a C-C double bond such as methylene, for example as shown in Forumla 5 below). In addition, R₂ may also be included at other positions on the piperidine ring, for example at any one, any two, or at all three of, the 3, 4 and 5 positions on the piperidine ring.

In some embodiments, R₂ may be an ester and may have the general formula: 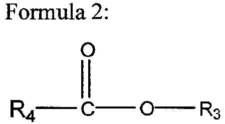
wherein R₃ may be either the piperidine ring (where the ester moiety is attached directly to the piperidine ring) or an additional functional group (e.g., a C₁-C₃₀ saturated or unsaturated aliphatic functional group) that functions as a bridging group between the ester moiety and the piperidine ring; and
wherein R₄ may be a saturated or unsaturated carbon-containing moiety, for example an aliphatic function group (e.g., a straight, branched or cyclic aliphatic group). In some embodiments, R₄ together with the carbon atom of the ester moiety may form a C₂-C₃₀ saturated or unsaturated ester.

In other embodiments, the positions of the R₃ and R₄ groups may be switched, with R₄ being either directly or indirectly attached to the piperidine ring and R₃ is a C₁-C₃₀ saturated or unsaturated functional group.

In some embodiments, one of R₃ or R₄ forms a bridge between the ester group and a second ester group, and the second ester group may be attached to a second piperidine moiety (see, e.g., Formulas 4 and 5 below). In some such embodiments, this bridging group may be unsaturated (e.g., contain a C-C double bond such as a methylene moiety), while in other embodiments the bridging group may be saturated.

Provided below in Formulas 3-5 are several examples of HALS of the present invention:

Cyasorb UV-3853, or 2,2,6,6-tetramethyl-4-piperidinyl stearate (fatty acids mixture, which has the chemical structure: 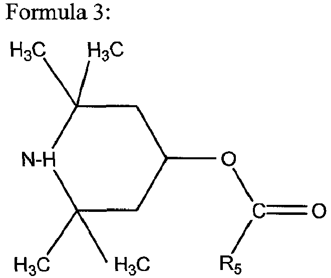 wherein R₅ is a C₂-C₂₄ alkyl or allyl group. In some embodiments, the HALS contains a mixture of different forms of Cyasorb, for example R₅ is a mixture of different possible fatty acid moieties such that the ester portion in the Cyasorb is a mixture of two or more of stearic, palmitic, heptadecanoic, myristic, oleic, and other esters.

Tinuvin 770, or decanedioic acid, bis (2,2,6,6 tetramethyl-4-piperidinyl), has the following structure:

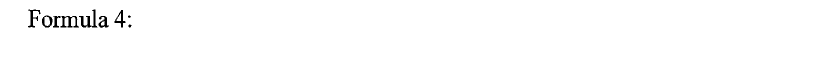

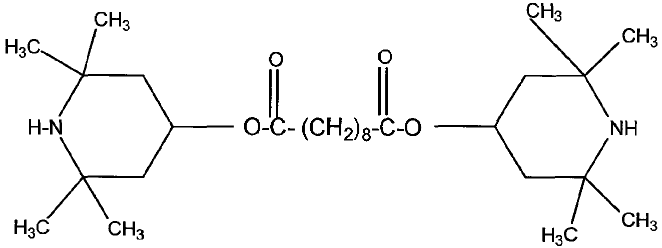

Further, Hostavin PR-31, or bis(1,2,2,6,6-pentamethyl-4-piperidinyl)-2-(4-methoxy-benzylidene) malonate, has the following structure:

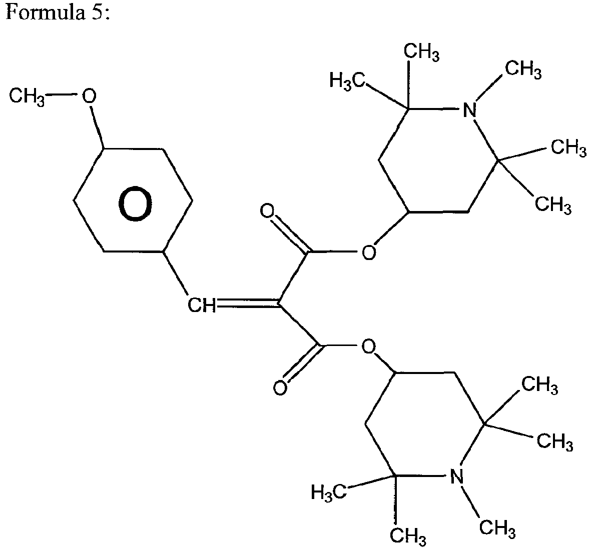

One method for testing the stability of a pipe in the presence of an oxidizing agent is the Oxidative Induction Time (OIT) test. In this test, a sample of the pipe material is placed in a DSC and held at a constant temperature of 200°C in an oxygen-rich atmosphere. The amount of time to the induction of polymer degradation is measured. A longer time before a change in heat flow is observed indicates that the sample would be relatively more stable in the presence of an oxidizing agent. The test method for the OIT test is ASTM-D3895-80, which is herein incorporated by reference in its entirety.

Another test that is performed on pipe samples to evaluate oxidative resistance is called the Oxidative Resistance (OR) test. This test is described in ASTM F 2023-04 (April 2004), which is incorporated herein by reference in its entirety. This test places chlorinated water in a pipe under a number of different combinations of elevated pressure and temperature until the pipe fails. The time until failure of the pipe at the different combinations of temperature and pressure is used to estimate the life of the pipe. The OIT test has been found to correlate to the results of the OR test. For example, polymer pipes that achieve longer times in the OIT test also tend have a longer time until failure in the OR test.

In some embodiments of the invention, the combination of a AO and a HALS provides an increased level of oxidative resistance relative to using either AO or HALS alone. Specifically, in some embodiments the combination includes one or more of the phenolic AOs described above together with one or more of the HALS described above (e.g., the piperidine, ester-containing HALS, the piperidine-containing HALS with long chain (e.g., straight or branched) aliphatic functional groups that are compatible with structural polymers such as PE, or the HALS with unsaturated bridging groups between the piperidine groups). One example polymer blend comprises 0.28-0.39 wt% cross-linking agent, 0.38-0.57 wt% AO, 0.05-0.2 wt% HALS, and the balance being structural polymer such as PE along with other optional additives. Another example polymer blend includes 0.1-0.5 wt% cross-linking agent, 0.05-0.6 wt% AO, 0.01-0.6 wt% HALS, and the balance being structural polymer such as PE along with other optional additives. Yet another example polymer blend includes 0.2-0.45 wt% cross-linking agent, 0.2-0.6 wt% AO, 0.05-0.3 wt% HALS, and the balance being structural polymer such as PE along with other optional additives. In yet another example polymer blend includes about 0.35 wt% or about 0.28 wt% cross-linking agent, about 0.5 wt% AO, about 0.1 wt% or about 0.15 wt% HALS, and the balance being structural polymer such as PE along with other optional additives.

Certain AO/HALS combinations of the invention may provide an oxidative resistance as measured under the OR test of greater than 50 years, greater than 75 years, greater than 100 years, greater than 150 years, or greater than 200 years. Certain AO/HALS combinations may also provide greater than 60 minutes, greater than 75 minutes, greater than 90 minutes, greater than 100 minutes, or greater than 125 minutes under the OIT test. In addition, another test described in ASTM 876-08b, which is incorporated herein by reference in its entirety, is the Stabilizer Functionality test. This test is used to demonstrate a pipe material's ability to withstand long term elevated temperature conditions.

Examples of various polymer blends and the OR or OIT results of these various polymer blends are provided below. The DSC curves for the OIT testing in Examples 1-5 are provided in Figure 1. Weight percent throughout this application is based on the weight percent relative to the entire polymer blend unless otherwise indicated.

### Example 1

The following components were blended together to form a polymer blend: 0.39 wt% of t-butyl peroxide cross-linking agent and the remainder Lupolen 5261Z Q456 polyethylene polymer. The polymer blend was passed through a RAM extruder to form the material into the shape of a pipe. A small sample (approximately 5 grams) of the pipe was subjected to the OIT test described above. Onset of oxidative degradation occurred in less than 1 minute.

### Example 2

A polymer blend was formed in the same manner as described with respect to Example 1, with Tinuvin 770 added to the polymer blend in an amount of 0.2 wt% (the wt% of the Lupolen 5261Z Q456 was reduced a corresponding amount to account for the Tinuvin 770). OIT testing performed on this sample showed that oxidative degradation occurred in approximately 17-18 minutes.

### Example 3

A polymer blend was formed in the same manner as described with respect to Example 1, with PP18S (which is identical to Irganox 1076) added to the polymer blend in an amount of 0.57 wt% (the wt% of the Lupolen 5261Z Q456 was reduced a corresponding amount to account for the PP18S). OIT testing performed on this sample showed that oxidative degradation occurred in approximately 33 minutes.

### Example 4

A polymer blend was formed in the same manner as described with respect to Example 1, with PP18S added to the polymer blend in an amount of 0.57 wt% and Tinuvin 770 added to the polymer blend in an amount of 0.2 wt% (the wt% of the Lupolen 5261Z Q456 was reduced a corresponding amount to account for the Tinuvin 770 and PP18S). OIT testing performed on this sample showed that oxidative degradation occurred in approximately 107 minutes.

### Example 5

A polymer blend was formed in the same manner as described with respect to Example 1, with PP18S added to the polymer blend in an amount of 0.57 wt% and Cyasorb 3853 added to the polymer blend in an amount of 0.2 wt% (the wt% of the Lupolen 5261Z Q456 was reduced a corresponding amount to account for the Cyasorb 3853 and PP18S). OIT testing performed on this sample showed that oxidative degradation occurred in approximately 80 minutes.

### Example 6

A polymer pipe was produced according to the method described in Example 3. The pipe was subjected to OR testing. Results of the OR testing indicate that the pipe would have an estimated life of 10-40 years in the presence of an oxidative agent such as chlorine.

### Example 7

A polymer pipe was produced according to the method described in Example 4. The pipe was subjected to OR testing. Results of the OR testing indicate that the pipe would have an estimated life of more than 200 years in the presence of an oxidative agent such as chlorine.

### Example 8

A polymer pipe was produced according to the method described in Example 1 except that Hostavin PR 31 was added at 0.05 wt%, PP18S was added at 0.50 wt%, the t-butyl peroxide cross-linking agent was added at 0.35 wt%, with the remainder being Lupolen 5261Z Q456. A sample of this pipe was tested according to the Stabilizer Functionality test an the sample achieved 4300 hours (3000 hours is considered a passing test result).

### Example 9

A polymer pipe was produced according to the method described in Example 8 except that Hostavin PR 31 was added at 0.1 wt%. A sample of this pipe was tested according to the Stabilizer Functionality test an the sample achieved more than 4300 hours (3000 hours is considered a passing test result).

Examples 1-9 show that using the AO/HALS combinations of the present invention in polymer blends for pipe production provides relatively high oxidative resistance, and in some instances provides greater oxidative resistance than the results from AO-only and HALS-only polymer blends would indicate (i.e., the combination of certain types of HALS and certain types of AOs appears to provide results greater than the sum of the results from the HALS alone and the AO alone).

Various additional HALS were also processed in a RAM extrusion system, providing an indication of the processability for certain HALS. The HALS were introduced into the polymer blends as described in Example 4 (the various HALS were added in place of Tinuvin 770). The following HALS did not appear to be highly miscible with the PE structural polymer, and the extruded polymer blend was nonhomogeneous, with substantial domains of HALS visible in the pipe: Tinuvin 622, Tinuvin 123, Tinuvin 111, Cyasorb 3346, Cyasorb 3529, THT 6460, THT 7001, Univul 4050, Univul 5062, Lowilite 94, Chimassorb 994 LD, Chimassorb 2020, Hostavin N20, Hostavin N30, and Hostavin N321. Pipe made from each of these polymer blends failed burst strength testing according to the standard specification for PEX pipe (see ASTM F876-08b (January 2009), which is incorportated herein by reference in its entirety). Several of these HALS formulations (including the Cyasorb 3853 and the Tinuvin 622 formulations) were also run through a twin screw extrusion system. Under the more rigorous mixing mechanism of a twin screw extruder, the polymer blends that incorporated these HALS were more homogeneous and the resulting pipe passed burst strength testing.

The Tinuvin 770, Cyasorb 3853 and the Hostavin PR 31 were also processed as described above in Example 4. Pipe produced from these polymer blends using a RAM extruder provided a homogeneous polymer blend. Samples of these pipes passed burst strength testing and all other requirements of the ASTM F876 specification.

In some embodiments of the present invention, the resulting pipe is 5/16 inch outer diameter or larger, or 1/2 inch OD or larger. The wall thickness may be, for example, +/- 1.78 mm for the 1/2 inch pipe. Burst strength may be 215 psi or greater, 250 psi or greater, or 300 psi or greater. Other wall thicknesses, thickness tolerances and burst strength targets are provided in ASTM F876-08b, which is incorporated herein by reference in its entirety.

Tinuvin 770, Cyasorb 3853 and Hostavin PR 31 pipe samples were also tested according to the NSF 61 test method to determine the amount of the HALS that leaches from the pipe into water that is resident in the pipe. The NSF 61 specification is incorporated herein by reference in its entirety. Experimental pipe using Cyasorb 3853 and Hostavin PR 31 passed the NSF 61 test, while Tinuvin 770 did not pass the NSF 61 test.

Without being bound by the theory, it is believed that the relatively long chain fatty acid portions that do not act as bridging groups in the Cyasorb 3853 provide a portion of the Cyasorb 3853 compound that is compatible with the PE structural polymer. This compatibility provides a level of miscibility and homogeneity in the polymer blend that both improves the burst strength of the finished pipe and prevents the leaching of the Cyasorb 3853 into water that is resident within the pipe. In addition, again without being bound by the theory, is it believed that the methylene double bond available in the Hostavin PR 31 compound provides a site at which the Hostavin may actually bond with the PE structural polymer, essentially locking the HALS in and preventing the HALS from leaching into water that is resident within the pipe.

The present application and invention further includes the subject matter of the following numbered clauses:
1. A flexible polymeric pipe with an outer diameter of at least 5/16 inch, with a wall thickness of between 1.75 mm and 2.05 mm and a burst strength of at least 300 psi, the pipe comprising:
   at least 95% by weight of the polymeric pipe of polyethylene structural polymer;
   between 0.1% and 0.50% by weight of the polymeric pipe of a cross-linking agent;
   between 0.05% and 0.6% by weight of the polymeric pipe of an antioxidant; and
   between 0.01 % and 0.6% by weight of the polymeric pipe of a hindered amine light stabilizer selected from the group consisting of: 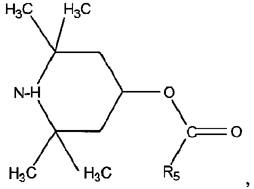 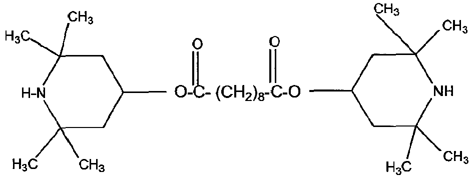 or 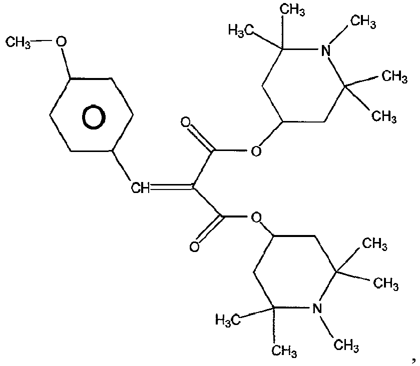 where R₅ is a C₂-C₂₄ alkyl or allyl group.
2. The flexible polymeric pipe of clause 1, wherein the hindered amine light stabilizer comprises: 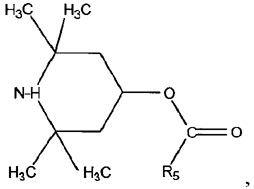 where R₅ is a C₂-C₂₄ alkyl or allyl group.
3. The flexible polymeric pipe of clause 1, wherein the hindered amine light stabilizer comprises: 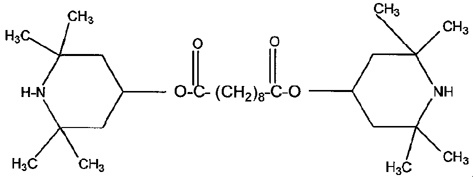
4. The flexible polymeric pipe of clause 1, wherein the hindered amine light stabilizer comprises: 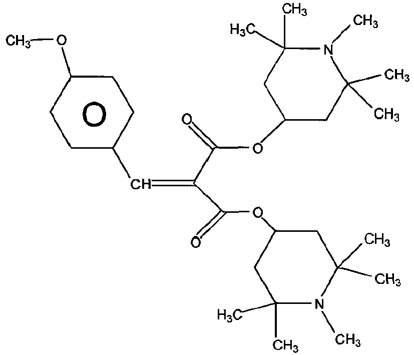
5. A flexible polymeric pipe with an outer diameter of at least 5/16 inch, with a wall thickness of between 1.75 mm and 2.05 mm and a burst strength of at least 300 psi, the pipe comprising:
   at least 95% by weight of the polymeric pipe of polyethylene structural polymer;
   between 0.1% and 0.50% by weight of the polymeric pipe of a cross-linking agent;
   between 0.05% and 0.6% by weight of the polymeric pipe of an antioxidant; and
   between 0.01% and 0.6% by weight of the polymeric pipe of a hindered amine light stabilizer including a piperidine structure with at least one alkyl group at each of the 2 and 6 positions of the piperidine structure and C₁₂-C₂₁-saturated or -unsaturated esters at least one of the 3, 4 or 5 positions of the piperidine structure.
6. The flexible polymeric pipe of clause 1, wherein the cross-linking agent comprises di-tert-butyl peroxide.
7. The flexible polymeric pipe of clause 1, wherein the antioxidant comprises octadecyl 3-(3-5-di-tert-butyl-4-hydroxyphenyl) propionate.
8. The flexible polymeric pipe of clause 1, wherein the hindered amine light stabilizer includes a piperidine structure with two alkyl groups at each of the 2 and 6 positions of the piperidine structure.
9. The flexible polymeric pipe of clause 1, wherein the hindered amine light stabilizer comprises: 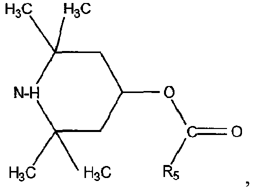 where R₅ is a C₂-C₂₄ alkyl or allyl group.
10. A flexible polymeric pipe with an outer diameter of at least 5/16 inch, with a wall thickness of between 1.75 mm and 2.05 mm and a burst strength of at least 300 psi, the pipe comprising:
   at least 95% by weight of the polymeric pipe of a cross-linked polyethylene;
   between 0.1% and 0.5% by weight of the polymeric pipe of a cross-linking agent;
   between 0.05% and 0.6% by weight of the polymeric pipe of an antioxidant; and
   between 0.01 % and 0.6% by weight of the polymeric pipe of a hindered amine light stabilizer having two piperidine structures each with at least one alkyl group at each of the 2 and 6 positions of the piperidine structure, wherein the piperidine structures are attached to one another via a bridging group, the bridging group having one or more double bonds.
11. The flexible polymeric pipe of clause 10, wherein the cross-linking agent comprises di-tert-butyl peroxide.
12. The flexible polymeric pipe of clause 10, wherein the antioxidant comprises octadecyl 3-(3-5-di-tert-butyl-4-hydroxyphenyl) propionate.
13. The flexible polymeric pipe of clause 10, wherein the bridging group comprises one or more ester functional groups.
14. The flexible polymeric pipe of clause 10, wherein the bridging group comprises two or more ester functional groups.
15. The flexible polymeric pipe of clause 10, wherein the bridging group comprises a methylene group.
16. The flexible polymeric pipe of clause 10, wherein the bridging group comprises a methylene group between two ester functional groups, wherein both of the ester groups are attached directly to a piperidine group at a 3, 4 of 5 positions.
17. The flexible polymeric pipe of clause 10, wherein the hindered amine light stabilizer includes a piperidine structure with two alkyl groups at each of the 2 and 6 positions of the piperidine structure.
18. The flexible polymeric pipe of clause 10, wherein the hindered amine light stabilizer comprises:

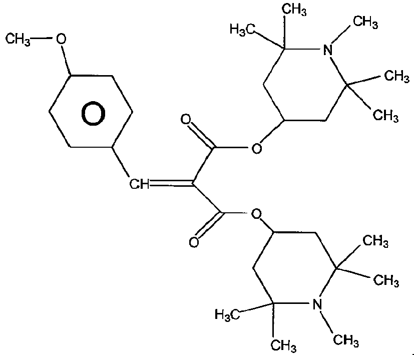

## Claims

1. A flexible polymeric pipe comprising:
at least 95% by weight of the polymeric pipe of polyethylene structural polymer;
between 0.1 % and 0.5% by weight of the polymeric pipe of a cross-linking agent;
between 0.05% and 0.6% by weight of the polymeric pipe of an antioxidant; and
between 0.01 % and 0.6% by weight of the polymeric pipe of a hindered amine light stabilizer,
wherein the hindered amine light stabilizer is selected from:
(a) a hindered amine light stabilizer which comprises a piperidine structure with at least one alkyl group at each of the 2 and 6 positions of the piperidine structure and C₁₂-C₂₁-saturated or -unsaturated esters at at least one of the 3, 4 or 5 positions of the piperidine structure; and
(b) 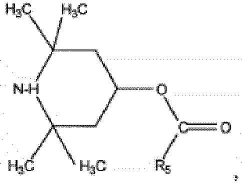 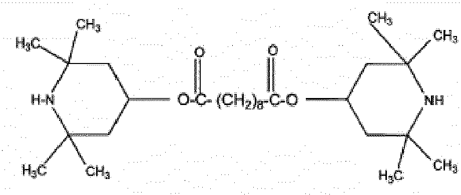 or 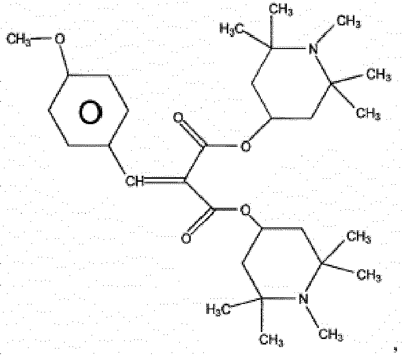 wherein R₅ is a C₂-C₂₄ alkyl or allyl group.

2. The flexible polymeric pipe of claim 1, wherein the hindered amine light stabilizer comprises a piperidine structure with at least two alkyl groups at each of the 2 and 6 positions of the piperidine structure.

3. The flexible polymeric pipe of claim 1, wherein the hindered amine light stabilizer comprises: 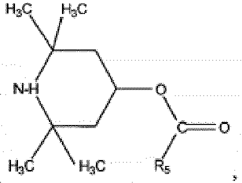 wherein R₅ is a C₂-C₂₄ alkyl or allyl group.

4. The flexible polymeric pipe of claim 3, wherein R₅ is a mixture of different possible fatty acid moieties such that the ester portion is a mixture of two or more of stearic, palmitic, heptadecanoic, myristic, oleic and other esters.

5. The flexible polymeric pipe of claim 3, wherein the hindered amine light stabilizer comprises 2,2,6,6-tetramethyl-4-piperidynyl stearate.

6. The flexible polymeric pipe of claim 1, wherein the hindered amine light stabilizer comprises at least one of the following compounds: 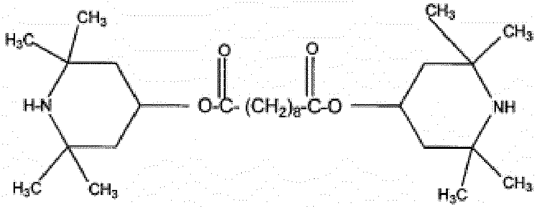 or

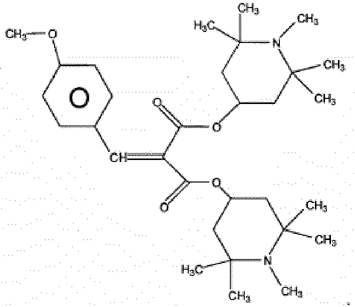

7. The flexible polymeric pipe of any preceding claim, wherein the cross-linking agent comprises a dialkyl peroxide, a diacylperoxide, a diperoxyketal, a hydroperoxide, a ketone peroxide, or a peroxydicarbonate; optionally wherein the cross-linking agent comprises di-tert-butyl peroxide.

8. The flexible polymeric pipe of preceding claim, wherein the antioxidant is a phenolic antioxidant.

9. The flexible polymeric pipe of preceding claim, wherein the antioxidant is octadecyl 3-(3,5-di-tert-butyl-4-hydroxyphenyl) propionate.

10. The flexible polymeric pipe of preceding claim, wherein the polyethylene structural polymer is selected from high density polyethylene, low density polyethylene, medium density polyethylene, or ultra-high molecular weight polyethylene, or combinations thereof.

11. The flexible polymeric pipe of any of claims 1 to 9, wherein the polyethylene structural polymer comprises high density polyethylene.

12. A method of producing a flexible polymeric pipe, wherein the method comprises providing a blend of:
of at least 95% by weight of the blend of polyethylene structural polymer;
between 0.1 % and 0.5% by weight of the blend of a cross-linking agent;
between 0.05% and 0.6% by weight of the blend of an antioxidant; and
between 0.01 % and 0.6% by weight of the blend of a hindered amine light stabilizer as defined in claim 1,
wherein the blend is extruded through a die to produce a pipe-shaped structure and the structural polymer is cross-linked.

13. The method of claim 12, wherein the polyethylene structural polymer is cross-linked at least in part while the blend is being extruded.

14. The method of claim 12 or claim 13, wherein the components of the blend are further defined as specified in any of claims 2 to 11.

## Patentansprüche

1. Flexible Polymerrohrleitung, umfassend:
mindestens 95 % Polyethylen-Strukturpolymer, bezogen auf das Gewicht der Polymerrohrleitung;
zwischen 0,1 % und 0,5 % eines Vernetzungsmittels, bezogen auf das Gewicht der Polymerrohrleitung;
zwischen 0,05 % und 0,6 % eines Antioxidans, bezogen auf das Gewicht der Polymerrohrleitung; und
zwischen 0,01 % und 0,6 % eines gehinderten Amin-Lichtstabilisators, bezogen auf das Gewicht der Polymerrohrleitung,
wobei der gehinderte Amin-Lichtstabilisator ausgewählt ist aus:
(a) einem gehinderten Amin-Lichtstabilisator, der eine Piperidinstruktur mit mindestens einer Alkylgruppe an jeder der 2- und 6-Positionen der Piperidinstruktur und C₁₂ - C₂₁-gesättigte oder -ungesättigte Ester an mindestens einer der 3-, 4- oder 5-Positionen der Piperidinstruktur umfasst; und
(b) 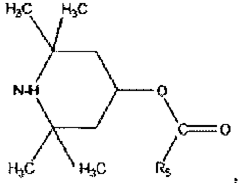 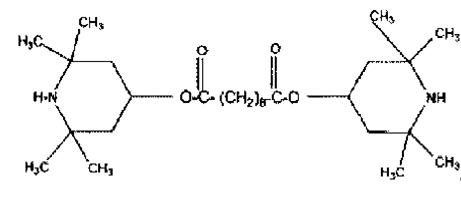 oder 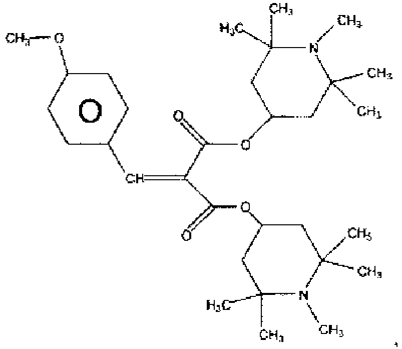 wobei R₅ eine C₂-C₂₄-Alkyl- oder Allyl-Gruppe ist.

2. Flexible Polymerrohrleitung nach Anspruch 1, wobei der gehinderte Amin-Lichtstabilisator eine Piperidinstruktur mit mindestens zwei Alkylgruppen an jeder der 2- und 6-Positionen der Piperidinstruktur umfasst.

3. Flexible Polymerrohrleitung nach Anspruch 1, wobei der gehinderte Amin-Lichtstabilisator Folgendes umfasst: 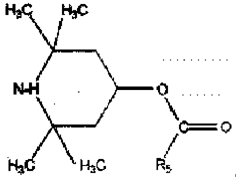 wobei R₅ eine C₂-C₂₄-Alkyl- oder Allyl-Gruppe ist.

4. Flexible Polymerrohrleitung nach Anspruch 3, wobei R₅ eine Mischung aus verschiedenen möglichen Fettsäureanteilen ist, sodass der Esterteil eine Mischung aus zwei oder mehr von Stearin-, Palmitin-, Heptadecan-, Myristin- und Ölsäure und anderen Estern ist.

5. Flexible Polymerrohrleitung nach Anspruch 3, wobei der gehinderte Amin-Lichtstabilisator 2,2,6,6-tetramethyl-4-piperidinyl-stearat umfasst.

6. Flexible Polymerrohrleitung nach Anspruch 1, wobei der gehinderte Amin-Lichtstabilisator
zumindest eine der folgenden Verbindungen umfasst: 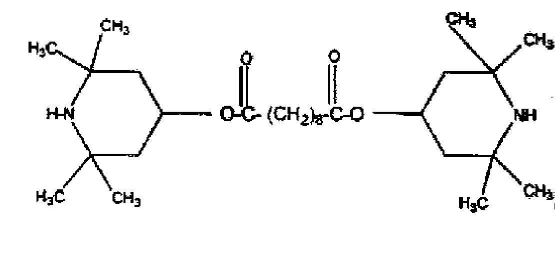 oder

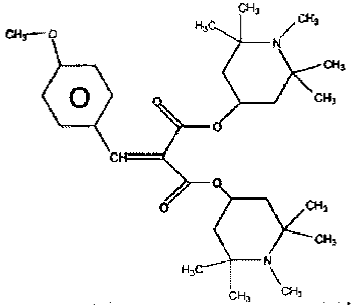

7. Flexible Polymerrohrleitung nach einem der vorhergehenden Ansprüche, wobei das Vernetzungsmittel ein Dialkylperoxid, ein Diacylperoxid, ein Diperoxyketal, ein Hydroperoxid, ein Ketonperoxid oder ein Peroxydicarbonat umfasst; wobei das Vernetzungsmittel wahlweise Di-tert-butylperoxid umfasst.

8. Flexible Polymerrohrleitung nach einem der vorhergehenden Ansprüche, wobei das Antioxidans ein phenolisches Antioxidans ist.

9. Flexible Polymerrohrleitung nach einem der vorhergehenden Ansprüche, wobei das Antioxidans ein Octadecyl-3-(3,5-di-tert-butyl-4-hydroxyphenyl)-propionat ist.

10. Flexible Polymerrohrleitung nach einem der vorhergehenden Ansprüche, wobei das Polyethylen-Strukturpolymer aus Polyethylen hoher Dichte, Polyethylen niedriger Dichte, Polyethylen mittlerer Dichte oder Polyethylen mit ultrahohem Molekulargewicht oder Kombinationen davon ausgewählt ist.

11. Flexible Polymerrohrleitung nach einem der Ansprüche 1 bis 9, wobei das Polyethylen-Strukturpolymer eine hohe Dichte von Polyethylen umfasst.

12. Verfahren zur Herstellung einer flexiblen Polymerrohrleitung, wobei das Verfahren die Bereitstellung einer Mischung aus folgenden Komponenten umfasst:
mindestens 95 % an Polyethylen-Strukturpolymer, bezogen auf das Gewicht der Mischung des Polyethylen-Strukturpolymers;
zwischen 0,1 % und 0,5 % eines Vernetzungsmittels, bezogen auf das Gewicht der Mischung;
zwischen 0,05 % und 0,6 % eines Antioxidans, bezogen auf das Gewicht der Mischung; und
zwischen 0,01 % und 0,6 % eines gehinderten Amin-Lichtstabilisators nach Anspruch 1, bezogen auf das Gewicht der Mischung,
wobei die Mischung durch eine Düse extruiert wird, um eine rohrförmige Struktur herzustellen, und das Strukturpolymer vernetzt ist.

13. Verfahren nach Anspruch 12, wobei das Polyethylen-Strukturpolymer mindestens teilweise vernetzt wird, während die Mischung extrudiert wird.

14. Verfahren nach Anspruch 12 oder Anspruch 13, wobei die Komponenten der Mischung ferner wie in einem der Ansprüche 2 bis 11 angegeben definiert sind.

## Revendications

1. Tuyau de polymère souple comprenant :
au moins 95% en poids du tuyau polymère constitué de polymère structurel de polyéthylène ;
entre 0,1% et 0,5% en poids du tuyau polymère constitué d'un agent de réticulation ;
entre 0,05% et 0,6% en poids du tuyau polymère constitué d'un agent anti-oxydant ; et
entre 0,01% et 0,6% en poids du tuyau polymère constitué d'un stabilisateur gêné de lumière d'amine,
où le stabilisateur gêné de lumière d'amine est choisi parmi :
(a) un stabilisateur gêné de lumière d'amine comprenant une structure pipéridine avec au moins un groupe alkyle à chacune des positions 2 et 6 de la structure pipéridine et des esters saturés ou insaturés en C₁₂-C₂₁ à au moins l'une des positions 3, 4 ou 5 de la structure pipéridine ; et
(b) 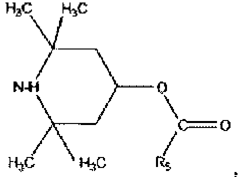 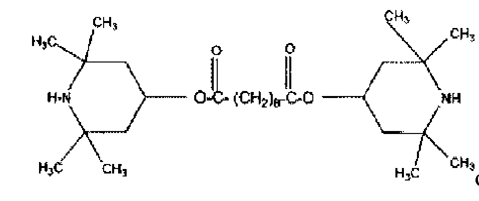 ou 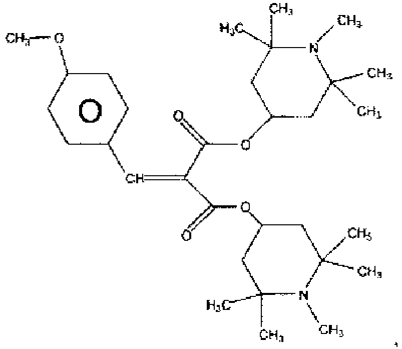 où R₅ est un groupe allyle ou alkyle C₂-C₂₄.

2. Tuyau de polymère souple selon la revendication 1, où le stabilisateur gêné de lumière d'amine comprend une structure pipéridine stabilisateur avec au moins deux groupes alkyles à chacune des positions 2 et 6 de la structure pipéridine.

3. Tuyau de polymère souple selon la revendication 1, où le stabilisateur gêné de lumière d'amine comprend : 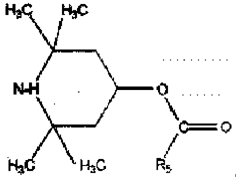 où R₅ est un groupe allyle ou alkyle C₂-C₂₄.

4. Tuyau de polymère souple selon la revendication 3, où R₅ est un mélange de différentes fractions d'acides gras possibles de sorte que la portion d'ester est un mélange de deux ou plusieurs esters parmi les esters stéarique, palmitique, heptadécanoïque, myristique, oléique et autres.

5. Tuyau de polymère souple selon la revendication 3, où le stabilisateur gêné de lumière d'amine se compose de stéarate de 2,2,6,6-tétraméthyle-4-pipéridynyle.

6. Tuyau de polymère souple selon la revendication 1, où le stabilisateur gêné de lumière d'amine comprend au moins l'un des composés suivants : 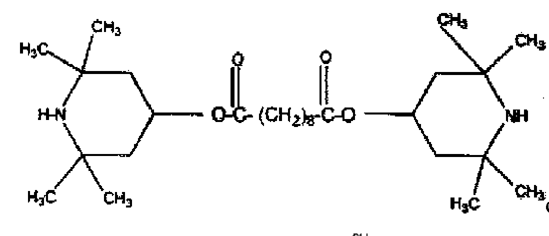 ou

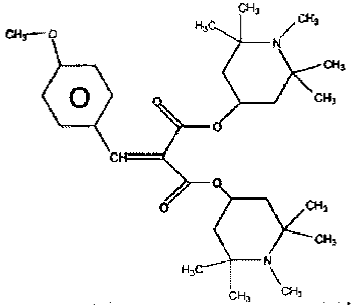

7. Tuyau de polymère souple selon l'une des revendications précédentes, où l'agent de réticulation comprend un peroxyde de dialkyle, un peroxyde de diacyle, un peracétal, un hydroperoxyde, un peroxyde de cétone ou un peroxydicarbonate ; éventuellement où l'agent de réticulation comprend un peroxyde de di-tert-butyle.

8. Tuyau de polymère souple selon la revendication précédente, où l'antioxydant est un antioxydant phénolique.

9. Tuyau de polymère souple selon la revendication précédente, où l'antioxydant est le propionate octadécyle 3-(3,5-di-tert-butyl-4-hydroxyphénylique).

10. Tuyau de polymère souple selon la revendication précédente, où le polymère structurel de polyéthylène est choisi parmi le polyéthylène haute densité, le polyéthylène de faible densité, le polyéthylène de moyenne densité ou le polyéthylène de poids moléculaire ultra-élevé ou des combinaisons de ceux-ci.

11. Tuyau de polymère souple selon l'une des revendications 1 à 9, où le polymère structurel de polyéthylène est choisi parmi le polyéthylène haute densité.

12. Procédé de fabrication d'un tuyau de polymère souple, où le procédé comprend la fourniture d'un mélange de :
au moins 95% en poids du mélange de polymère structurel de polyéthylène ;
entre 0,1% et 0,5% en poids du mélange d'un agent de réticulation ;
entre 0,05% et 0,6% en poids du mélange d'un agent antioxydant ; et
entre 0,01 % et 0,6% en poids du mélange d'un stabilisateur gêné de lumière d'amine tel que défini dans la revendication 1,
où le mélange est extrudé à travers une filière pour produire une structure en forme de tuyau et le polymère structurel est réticulé.

13. Procédé selon la revendication 12, où le polymère structurel de polyéthylène est réticulé au moins en partie pendant l'extrusion du mélange.

14. Procédé selon la revendication 12 ou la revendication 13, où les composants du mélange sont en outre définis comme cela est indiqué dans l'une des revendications 2 à 11.
